# EUROPÄISCHE PATENTSCHRIFT

(11) **EP 1 951 504 B1**
(45) Veröffentlichungstag und Bekanntmachung des Hinweises auf die Patenterteilung: **16.08.2017**
(21) Anmeldenummer: 06819199.8
(22) Anmeldetag: 31.10.2006
(51) Int. Cl.: B29C 55/14, B29C 55/16, B29C 55/06, B29C 59/14, B29C 59/08, B29C 59/10

(54) **BIAXIAL ORIENTIERTE POLYOLEFINFOLIE MIT VERBESSERTEN OBERFLÄCHENEIGENSCHAFTEN**
BIAXIALLY ORIENTED POLYOLEFIN FILM HAVING IMPROVED SURFACE PROPERTIES
PELLICULE POLYOLÉFINIQUE À ORIENTATION BIAXIALE PRÉSENTANT DES PROPRIÉTÉS DE SURFACE AMÉLIORÉES

(30) Priorität: 03.11.2005 DE 102005052441
(43) Veröffentlichungstag der Anmeldung: 06.08.2008
(73) Patentinhaber: Treofan Germany GmbH & Co. KG, 66539 Neunkirchen (DE)
(72) Erfinder: JUNG, Joachim, 66540 Neunkirchen (DE); GOTTFREUND, Thomas, 66386 St. Ingbert (DE)
(74) Vertreter: Kremer, Viola
(86) Internationale Anmeldenummer: PCT/EP2006/067973
(87) Internationale Veröffentlichungsnummer: WO 2007/051797

(56) Entgegenhaltungen:
- EP-A1- 1 112 836
- EP-A2- 0 947 544
- WO-A-01/85447
- JP-A- 2000 001 554
- JP-A- 2001 089 590
- US-A- 5 147 678

## Beschreibung

Die Erfindung betrifft eine biaxial orientierte Polyolefinfolie mit verbesserten Oberflächeneigenschaften, sowie ein Verfahren zur Herstellung dieser Folien und deren Verwendung.

In der kunststoffverarbeitenden Industrie, insbesondere in der Folienbranche, zählt die Oberflächenbehandlung mittels verschiedener Vorbehandlungsmethoden, wie z.B. elektrischer Koronaentladung, Flamme oder Plasma seit Jahren zum Stand der Technik. Diese Verfahren werden zur Erhöhung der Oberflächenspannung eingesetzt, um Metallisierbarkeit und Bedruckbarkeit zu verbessern, bzw. zur Steigerung der Verbundfestigkeiten von Laminaten oder Haftfestigkeiten von Beschichtungen. Bei der Koronabehandlung wird eine Folienbahn über eine elektrisch geerdete Stützfläche, beispielsweise eine Walze, geführt. Über dieser Walze wird im Abstand von wenigen Millimetern zur Walze eine Gegenelektrode angeordnet. Durch das Anlegen eines mittel- bis hochfrequenten Wechselstroms hoher Spannung ionisieren, die von der Gegenelektrode emittierten Elektronen die Luft in dem Spalt zwischen Walze und Gegenelektrode. Die Ionen werden durch das elektrische Feld in Richtung Walzenelektrode beschleunigt und geben ihre Ladungen und Energie an die Folienoberfläche ab. Als Folge dieses Beschusses werden in der Polymeroberfläche Fragmentierungsreaktionen wie z.B. Abspaltungen oder Kettenbrüche initiiert. Es entstehen hochreaktive Stellen in der Oberfläche, die mit den Reaktionsprodukten der Koronaentladung oder aber Bestandteilen der umgebenden Atmosphäre reagieren können.

Derartige reaktive Spezies können auch durch andere physikalische Prozesse erzeugt werden, beispielsweise durch eine heiße Flamme (Flammbehandlung) oder durch Entladungsprozesse in einer kontrollierten Atmosphäre (N₂, O₂ oder Argon) bei reduziertem Druck (Niederdruck-Plasma). In jüngster Zeit wurden auch Verfahren entwickelt, bei denen das Plasma z.B. in einer gasdurchströmten Düse erzeugt wird und durch Ausrichtung dieser Düsen auf die Substrat-Oberfläche eine PlasmaBehandlung bei Atmosphärendruck durchgeführt werden kann.

Allen diesen Verfahren ist gemeinsam, dass durch Einwirkung der erzeugten reaktiven Spezies die Polymeroberfläche modifiziert wird und bei den anschließenden Verarbeitungsschritten verbesserte Hafteigenschaften aufweist. Nach diesem Grundprinzip arbeitende Verfahren sowie Vorrichtungen zur Durchführung dieser Verfahren werden mit all ihren Vor- und Nachteilen sehr ausführlich in G. Franz, Kalte Plasmen, Grundlagen, Erscheinungen, Anwendungen, Springer, Berlin 1990 und in A. Grill, Cold Plasma in Materials fabrication from Fundamentals to Application, IEEE Press, N.Y., 1994 und in H. Yasuda, Plasma Polymerization, Academic Press, London, 1985 und in H. Drost, Plasmachemie, Prozesse der chemischen Stoffumwandlung unter Plasmabedingungen, Akademie-Verlag, Berlin, 1978, sowie in der DE-A- 27 53 750 (= EP-B- 0 002 453, US-A- 4 239 973) beschrieben.

Die bekannten Verfahren haben sich zur Erhöhung der Oberflächenspannung von Folien bewährt. Die Aktivierung der Oberflächen von Folien wird wahlweise In-line, d.h. bei der Herstellung der Folie, oder unmittelbar vor dem jeweiligen Verarbeitungsschritt durchgeführt, der eine hohe Oberflächenspannung erfordert, wie z.B. Bedruckung, Metallisierung, Laminierung. Zu diesem Zweck haben Verarbeiter entsprechende Vorbehandlungsstationen in ihre Anlagen integriert. Bei der In-line Behandlung sind die Vorbehandlungsstationen an der Anlage zur Herstellung der Folie integriert, um die Vorbehandlung während der eigentlichen Folienherstellung durchzuführen. Sie befinden sich üblicherweise im sogenannten Auslauf, um die Folie nach der biaxialen Verstreckung und nach der Thermofixierung abschließend vor dem Aufwickeln einer entsprechenden Behandlung zu unterwerfen.

Die gewünschte aktivierende Wirkung einer Oberflächenbehandlung ist als Oberflächenspannung der Folie meßbar. Üblicherweise liegt dieser Wert für eine unbehandelte Polypropylenfolie in einem Bereich von 27 bis 30 mN/m Durch eine Coronabehandlung kann die Oberflächenspannung auf 40 bis 44mN/m erhöht werden. Diese Aktivierung der Oberfläche ist jedoch zeitlich nicht unbegrenzt stabil. Die Oberflächenspannung der behandelten Folie fällt über mehrere Wochen kontinuierlich ab, so daß nach wenigen Monaten Werte von 36 bis 38 mN/m erreicht sind, d.h. bis es zur Verarbeitung der Folie kommt sind die Werte so niedrig, daß vor der Bedruckung, Metallisierung oder anderen entsprechenden Verarbeitungsschritten eine erneute Oberflächenbehandlung erfolgen muß, um die gewünschte gute Haftfestigkeit sicherzustellen. Trotz dieser "Auffrischung" durch eine erneute Corona- oder Flammbehandlung werden die ursprünglichen Maximalwerte nicht mehr erreicht. Entsprechend sind die Hafteigenschaften dieser Folien, bzw. die durch diese Verfahren erzielten Hafteigenschaften verbesserungsbedürftig. Je nach Zusammensetzung der Folien sind derartige "Auffrischungen" manchmal gar nicht möglich, bzw. führen zu unerwünschten Nebenwirkungen auf Grund der Inhaltsstoffe der Folien.

Der Abfall der Vorbehandlung läßt sich nach dem Stand der Technik nicht durch höhere, d.h. intensivere In-line Vorbehandlungen verbessern. Eine zu hohe oder zu lange Vorbehandlung schädigt die Folienoberfläche, z.B. durch mechanische Aufrauhung oder Abtrag der Oberfläche und es kann zu einer zusätzlichen unerwünschten Vorbehandlung der Folienrückseite (Rückseiteneffekt) kommen. Des weiteren erzeugen hohe Behandlungsintensitäten einen nicht akzeptablen charakteristischen Geruch (Maggi), der die organoleptischen Eigenschaften negativ beeinflußt. Außerdem wurde festgestellt, daß höhere Ausgangswerte der Oberflächenspannung vergleichsweise noch schneller abfallen, so daß insgesamt keine längeren Lagerzeiten zwischen Herstellung und Weiterverarbeitung möglich sind.

Die Haltbarkeit der Oberflächenspannung hängt zusätzlich kritisch von der Art des Polymeren ab, welches der Oberflächenbehandlung unterworfen wird. So haben Mischpolymerisate, die aus verschiedenen Monomeren aufgebaut sind, grundsätzlich eine längere Haltbarkeit, wohingegen bei Homopolymeren, insbesondere Propylenhomopolymeren die Werte bereits nach drei Monate soweit abfallen, daß die Hafteigenschaften unzureichend sind. Es wurden daher auch Modifizierungen der Deckschicht zur Verbesserung der Hafteigenschaften vorgeschlagen.

Die EP 1282508 beschreibt eine Modifizierung durch eine spezielle Oberflächenschicht aus polyolefinischen Polymeren, die mindestens 50 Gew.-%, bezogen auf das Gewicht der Schicht, eines Maleinsäureanhydrid modifizierten Polyolefins enthalten. Die Folie wird zur Verbesserung der Hafteigenschaften während der Herstellung mittels Corona oder Flamme nach der biaxialen Verstreckung oberflächenbehandelt. Diese Oberflächenbehandlung fällt in der üblichen Weise über die Zeit ab, aber wenn vor der Bedruckung, Metallisierung oder Beschichtung eine "Auffrischung" erfolgt, werden auf Grund der Modifizierung des Deckschichtpolymeren mit Maleinsäureanhydrid die anfänglichen Werte wieder erreicht, wohingegen mit üblichen Siegelschicht oder mit Deckschichten aus Homopolymer mit der Auffrischung bestenfalls 80% der ursprünglichen Oberflächenspannung erreicht wird. Nach der Beschreibung in EP 1282508 erfolgt der zweite Behandlungsschritt offline, d.h. nach der Herstellung und Lagerung der Folie unmittelbar vor der Weiterverarbeitung.

Neben dem Abbau der aktivierenden Wirkung über die Zeit ist auch bekannt, daß die Wirkung der Oberflächenbehandlung durch erhöhte Temperaturen verloren geht. Beispielsweise reduziert sich die Oberflächenspannung einer mittels Niederdruck plasmabehandelten Polypropylenfolien von 72 auf < 28 mN/m, wenn die Folie nach der Vorbehandlung einige Minuten einer Temperatur von über 130°C ausgesetzt wird. Dieser Effekt verhindert, daß eine Folie in-line vor der Orientierung behandelt werden kann, da diese Orientierung in Längs- und Querrichtung nur bei erhöhter Temperatur möglich ist. In der Praxis sind daher alle Vorbehandlungsvorrichtungen derart in die Herstellanlagen integriert, daß die Oberflächenbehandlung nach der biaxialen Orientierung der Folie erfolgt.

Die US 5,147,678 beschreibt ein Verfahren zur Modifikation von Polymeroberflächen durch eine zweistufige Reaktionen auf Polymeroberflächen. wobei zumindest einer der Schritte "downstream" erfolgt oder eine nachgeschaltete Plasmabehandlung ist. Beispielsweise können Polymere mit verschiedenen Kombinationen behandelt werden: beisopielsweise mit einer (1) nachgeschalteten Stickstoff-Plasmabehandlung; (2) Ozonbehandlung; (3) Coronaentladungsbehandlung; (4) nachgeschalteten Sauerstoffplasmabehandlung; oder (5) einer nachgeschalteten Wasserstoffplasmabehandlung.

Die EP 1 112 836 beschreibt ein Verfahren zur Herstellung von benetzbaren Kunststoffolien, bei dem das Kunststoffmaterial aus einer Düse extrudiert und verstreckt wird und die Oberfläche des Kunststoffmaterials einer Vorbehandlung unterzogen wird, wobei die Vorbehandlung mittels eines Strahls eines atmosphärischen Plasmas in einem Arbeitsgang mit der Extrusion durchgeführt wird.

Der vorliegenden Erfindung liegt somit die Aufgabe zugrunde, ein Verfahren zur Oberflächenbehandlung von biaxial orientierten oder monoaxial orientierten Folien zu schaffen, durch welches die Folienoberfläche aktiviert wird und die Folien auch nach üblichen Lagerzeiten von mehr als 6 Monaten gute Hafteigenschaften in den Verfahren zur Weiterverarbeitung zeigen. Die Folie soll wirtschaftlich und kostengünstig herstellbar sein. Die übrigen geforderten Gebrauchseigenschaften der Folie dürfen dabei nicht beeinträchtigt werden.

Diese Aufgabe wird gelöst durch ein Verfahren zur Erhöhung der Oberflächenspannung von biaxial verstreckten Polyolefinfolien, deren Verstreckung aufeinanderfolgend durchgeführt wird, wobei zuerst in Längsrichtung und anschließend in Querrichtung verstreckt wird und die Polyolefinfolie auf einer Oberfläche nach der Längsstreckung und vor der Querstreckung über ihre Breite mittels Atmosphärendruck-Plasma behandelt wird und die Polyolefinfolie nach der Querstreckung und vor dem Aufwickeln zusätzlich einer zweiten Behandlung mittels Corona oder Flamme unterworfen wird und wobei diese zweite Behandlung auf der gleichen bereits plasmabehandelten Oberfläche erfolgt.

Diese Aufgabe wird des weiteren gelöst durch ein Verfahren zur Erhöhung der Oberflächenspannung von biaxial verstreckten Polyolefinfolien deren Verstreckung simultan durchgeführt wird, wobei die Polyolefinfolie vor der Simultanreckung auf einer Oberfläche über ihre Breite mittels Atmosphärendruck-Plasma behandelt und nach der Simultanreckung und vor dem Aufwickeln zusätzlich einer zweiten Behandlung mittels Corona oder Flamme unterworfen wird, wobei diese zweite Behandlung auf der gleichen bereits plasmabehandelten Oberfläche erfolgt.

Diese Aufgabe wird des weiteren gelöst durch Verfahren zur Erhöhung der Oberflächenspannung von monoaxial verstreckten Polyolefinfolien, wobei die Polyolefinfolien vor der Verstreckung auf einer Oberfläche über ihre Breite mittels Atmosphärendruck-Plasma behandelt und nach der Verstreckung und vor dem Aufwickeln zusätzlich einer zweiten Behandlung mittels Corona oder Flamme unterworfen wird, wobei diese zweite Behandlung auf der gleichen bereits plasmabehandelten Oberfläche erfolgt.

Im Rahmen der Untersuchungen zur vorliegenden Erfindung wurde gefunden, daß eine Oberflächenbehandlung, auch eine Plasmabehandlung, welche vor der Orientierung der Folie durchgeführt wird im Endeffekt wirkungslos bleibt. Es können zwar zunächst sehr hohe Werte von über 56mN/m durch das Plasma erzielt werden, nach der Orientierung sind diese Werte jedoch kaum über denen unbehandelter Folien. Überraschenderweise können durch Kombination einer Plasmabehandlung (atmosphärisches Plasma) vor der Querstreckung und einer nach der Querstreckung angeordneten Corona- oder Flammbehandlung hohe und stabile Werte für die Oberflächenspannung erzielt werden, welche nicht durch einen einzigen Behandlungschritt alleine oder nur durch Inkaufnahme anderer schwerwiegender Nachteile erreicht werden können.

Obwohl die Plasmabehandlung vor der Querstreckung alleine quasi keine Wirkung zeigt, da die hohe Temperatur bei der Querstreckung die gesamte ursprüngliche Wirkung wieder zerstört, wirkt die Plasmabehandlung in Kombination mit der Corona oder der Flamme anders und führt zu Werten, welche durch eine Coronabehandlung alleine technisch nicht erreichbar wären.

Die Plasmabehandlung, Flammbehandlung und die Coronabehandlung sind an sich im Stand der Technik bekannt und werden erfindungsgemäß so kombiniert, daß die Plasmabehandlung nach der Verstreckung der Folie in Längsrichtung, aber vor der Querstreckung und die Corona- oder Flammbehandlung nach der Querstreckung der Folie erfolgt. Insbesondere

Insbesondere werden die Vorrichtungen zur Plasmabehandlung so positioniert, daß die Folie das Streckwerk für die Längsstreckung, d.h. die schnelllaufende Streckwalze verlassen hat. Die Folie wird danach über eine temperierbare Walze geführt, über der die Plasmadüsen angeordnet sind. Über diese Walze können, je nach Folientyp oder Polymer, unterschiedliche geeignete Folientemperaturen während der Plasmabehandlung eingestellt werden. Anschließend wird die Folie in die Aufheizfelder der Querstreckung geführt, wo sie über geeignete Heizvorrichtungen auf die erforderliche Querstrecktemperatur erwärmt wird. Nach der Breitreckung im Querstreckrahmen erfolgt die Fixierung, gegebenenfalls bei konvergierender Führung des Rahmens. Die fixierte, biaxial verstreckte, plasma-behandelte Folie wird dann einer weiteren Oberflächenbehandlung mittels Corona oder Flamme unterworfen und abschließend aufgewickelt. Selbstverständlich erfolgen erfindungsgemäß beide Oberflächenbehandlung auf der gleichen Folienoberfläche, d.h. das erfindungsgemäße Verfahren ist nicht eine beidseitige Oberflächenbehandlung, sondern eine zweifache Behandlung der gleichen Oberfläche. Bei der Corona- oder Flammbehandlung kommen übliche Intensitäten zum Einsatz, alle Behandlungsparameter können im üblichen Rahmen variiert werden, so daß die Corona- bzw. Flammbehandlung an sich im wesentlichen einer Vorbehandlung nach dem Stand der Technik entspricht. Durch die vorgelagert Plasmabehandlung vor der Quersteckung können jedoch überraschenderweise sehr hohe Werte für die Oberflächenspannung erzielt werden.

In einer weiteren möglichen Ausführungsform kann die Folie gegebenenfalls zusätzlich in an sich bekannter Weise auf der der zweifach behandelten Seite gegenüberliegenden Seite (Rückseite) mittels Flamme oder Corona behandelt werden, da in einigen Anwendungen eine beidseitig oberflächenbehandelte Folie gewünscht wird. Die Oberflächenbehandlung auf dieser Rückseite erfolgt in konventioneller Weise mittels Flamme oder Corona nach der Längs- und Querverstreckung, sowie gegebenenfalls nach der Thermofixierung.

Das Prinzip der erfindungsgemäßen zweifach Behandlung kann in einer weiteren Ausführungsform der Erfindung auch bei der Herstellung von monoaxial verstreckten Folien angewendet werden. Hierbei kommt die besagte Plasmabehandlung vor dem einzigen Streckschritt zum Einsatz und nach der Verstreckung erfolgt die zusätzliche Corona- oder Flammbehandlung auf der gleichen Oberfläche. Auf diese Weise werden monoaxial verstreckte Folien hergestellt, die auf einer Oberfläche zunächst mit Plasma und nach der Verstreckung ein zweites Mal konventionell behandelt sind. Diese Verfahrensvariante ist insbesondere für nur in Längsrichtung verstreckte Folien bevorzugt. Hierbei sitzen die Plasmadüsen vor dem Längsstreckwerk. Die plasma-behandelte längsverstreckte Folie wird abschließend nach der Längsverstreckung, und gegebenenfalls nach der Thermofixierung einer weiteren Oberflächenbehandlung auf der bereits plasma-behandleten Oberfläche mittels Flamme oder Corona unterworfen

Grundsätzlich wird bei der Coronabehandlung die Folienbahn in an sich bekannter Weise über eine elektrisch geerdete Stützfläche, beispielsweise eine Walze, geführt. Über dieser Walze wird im Abstand von wenigen Millimetern zur Walze eine Gegenelektrode angeordnet. Durch das Anlegen eines mittel- bis hochfrequenten Wechselstroms hoher Spannung ionisieren die von der Gegenelektrode emittierten Elektronen die Luft in dem Spalt zwischen Walze und Gegenelektrode. Die Ionen werden durch das elektrische Feld in Richtung Walzenelektrode beschleunigt und geben ihre Ladungen und Energie an die Folienoberfläche ab. Als Folge dieses Beschusses werden in der Polymeroberfläche Fragmentierungsreaktionen wie z.B. Abspaltungen oder Kettenbrüche initiiert. Es entstehen hochreaktive Stellen in der Oberfläche, die mit den Reaktionsprodukten der Coronaentladung oder aber Bestandteilen der umgebenden Atmosphäre reagieren können.

Bei der Flammbehandlung wird die Folie über eine Kühlwalze geführt, oberhalb derer ein Gasbrenner angeordnet ist. Der Abstand zwischen Brenner und F olienoberfläche/Kühlwalze beträgt wenige mm und ist so gewählt, dass die Oxidationsreaktionen auf der Polymeroberfläche maximal werden. Bei der Oxidation der Polymeroberfläche entstehen polare Gruppen, wodurch die Oberflächenspannung der Folie vergrössert wird. Voraussetzung für eine einwandfreie Behandlung der Folie ist eine exakte Anlegung der Folienbahn auf der Kühlwalze und eine konstante Kühlwalzentemperatur.

Die Kühlwalzentemperatur beträgt im allgemeinen < 50°C Einzelheiten zur Flammbehandlung sind beispielsweise in "The base flame treatment process", H. Angeli/Fa. Esse Ci, 3rd International Meeting on the Plastic Surface Treatment, 1989, Narni, Italien beschrieben.

In einer modifizierten Variante wird die Flammbehandlung mit Polarisation durchgeführt, wie beispielsweise in "The polarized flame process", H. Lori/Fa. Esse Ci, 3rd International Meeting on the Plastic Surface Treatment, 1989, Narni, Italien beschrieben. Bei dieser Methode wird der Brenner oberhalb der Kühlwalze angeordnet. Zwischen dem Brenner und der Kühlwalze wird dabei eine Gleichspannung angelegt, wodurch die ionisierten Atome in der Flamme eine erhöhte Beschleunigung erhalten und mit grösserer kinetischer Energie auf die Polymeroberfläche auftreffen. Die thermische Belastung der Polymeroberfläche ist geringer als bei der Flammbehandlung ohne Polarisation. Bei gleicher Flammtemperatur wird beim Verfahren mit Polarisation eine höhere Oberflächenspannung erzielt als beim Verfahren ohne Polarisation.

Auch das Plasmabehandlungsverfahren bei Atmosphärendruck ist an sich im Stand der Technik bekannt und beschrieben. Für die Plasmabehandlung der längsverstreckten Folie vor der Querstreckung sind insbesondere die Behandlungen mittels eines Atmosphärendruck-Plasmas geeignet, bei welchen eine Plasma-Entladung in einer gasdurchströmten Düse bei Atmosphärendruck erzeugt wird. Derartige Verfahren zur Oberflächenbehandlung sind beispielsweise in DE 19532412 C2 beschrieben, auf welche hiermit ebenfalls ausdrücklich Bezug genommen wird.

Das erfindungsgemäße Verfahren kann zur Erhöhung der Oberflächenspannung von verschiedenen Folien aus thermoplastischem Polymer eingesetzt werden. Selbstverständlich können die Polymeren übliche Zusatzstoffe enthalten, wie beispielsweise Neutralisationsmittel, Stabilisatoren oder auch die Optik der Folie beeinflussende Substanzen wie Farbpigmente, insbesondere Titandioxid, oder Füllstoffe, welche die mechanische Festigkeit verbessern, sowie Füllstoffe die bei der biaxialen Orientierung Vakuolenbildung in der Polymermatrix verursachen. Die Folien können einschichtig oder mehrschichtig aufgebaut sein. Das Verfahren ist insbesondere für die Oberflächenbehandlung von Folien aus Polyolefinen, wie Polyethylenen, Polybutylen oder Polypropylenen oder Block-, Pfropf- oder statistische Copolymerisate auf Basis von Polyethylen, Polybutylen oder Polypropylen geeignet. Weiterhin können die Folien aus Polyester, z.B. PET, PBT, aus Polyurethan, Ethylenvinylacetat-Mischpolymerisat, Polyamid, Polyether, Polyvinylether und Vinylchlorid-Polymerisaten aufgebaut sein. In mehrschichtigen Folien sind die zu behandelnden Deckschichten aus den vorstehend aufgeführten Polymeren aufgebaut. Diese Deckschichten können dann in an sich bekannter Weise mit weiteren Schichten aus den gleichen oder anderen Polymeren kombiniert werden. Die Polymeren der Deckschichten werden nach den gewünschten Funktionalitäten ausgesucht.

Das erfindungsgemäße Verfahren ist insbesondere für einschichtige oder mehrschichtige Polypropylenfolien geeignet, welche für verschiedenste Zwecke, häufig als Verpackungsfolien, eingesetzt werden. Mehrschichtige Polypropylenfolien haben ein- oder beidseitig Deckschichten aus Propylencopolymer, Propylenterpolymer, Polyethylenen, Polybutylenen oder aus Mischungen dieser Polymeren, welche den Folien die gewünschte Siegelbarkeit oder eine spezielle Optik verleihen. Für hochglänzende Folien, die vorzugsweise in Laminier- oder Kaschieranwendungen gehen sind Deckschichten aus Propylenhomopolymer bevorzugt. Aufbau und Zusammensetzung, insbesondere auch geeignete Zusatzstoffe für Polypropylenfolien, sind im Stand der Technik bekannt und mehrfach im Einzelnen in zahlreichen Patentschriften beschrieben.

Die isotaktischen Propylenhomopolymere, die in den behandelten Folien eingesetzt werden, haben im allgemeinen einen Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min eingesetzt werden. Der n-heptanlösliche Anteil der isotaktischen Propylenhomopolymeren beträgt im allgemeinen 1 bis 10 Gew.-%, vorzugsweise 2-5 Gew.-% bezogen auf das Ausgangspolymere.

Die vorstehend genannten Propylenco- oder Terpolymere, die in den behandelten Folien eingesetzt werden, enthalten im allgemeinen mindestens 80 bis <100 Gew.-%, vorzugsweise 90 bis 99 Gew.-%, Propyleneinheiten. Der entsprechende Comonomergehalt von bis zu 20 Gew.-% bzw. zu 10 Gew.-% besteht im allgemeinen aus Ethylen und/oder Butylen. Die Angaben in Gew.-% beziehen sich jeweils auf das Propylenhomopolymere.

Insbesondere sind statistische Ethylen-Propylen-Copolymere mit einem Ethylengehalt von 1 bis 10 Gew.-% oder statistische Propylen-Butylen-Copolymere mit einem Butylengehalt von 2 bis 25 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, und einem Butylen-1-Gehalt von 2 bis 20 Gew%, jeweils bezogen auf das Gesamtgewicht des Terpolymeren, oder ein Blend aus Ethylen-Propylen-Butylen-1-Terpolymeren und Propylen-Butylen-1-Copolymeren, wobei das Blend einen Ethylengehalt von 0,1 bis 7 Gew.-%, eine Propylengehalt von 50 bis 90 Gew.-% und einem Butylen-1-Gehalt von 10 bis 40 Gew.-%, jeweils bezogen auf das Gesamtgewicht des Polymerblends, aufweist.

Diese Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können in der behandelten Deckschicht auch Polyolefine eingesetzt werden, die durch den Einbau von Maleinsäureanhydrideinheiten hydrophilisiert werden. Die Herstellung dieser modifizierten Polypropylene ist beispielsweise im US Patent 3,433,777 und US Patent 4,198,327 beschrieben. Die Dichte nach ASTM D 1505 der modifizierten Polyolefine liegt vorzugsweise in einem Bereich von 0,89 bis 0,92, insbesondere 0,9, der Vicat-Erweichungspunkt nach ASTM 1525 liegt in einem Bereich von 120 bis 150°C, insbesondere 140 bis 145°C, die Shore-Härte nach ASTM 2240 beträgt 55 bis 70, vorzugsweise 67°C und der Schmelzpunkt nach ASTM D 2117 liegt in einem Bereich von 150 bis 165°C, vorzugsweise 155 bis 160°C. Der Maleinsäureanteil im modifizierten Polyolefin liegt im allgemeinen unter 5% bezogen auf das modifizierte Polyolefin, vorzugsweise im Bereich von 0,05 bis 3 %, insbesondere 0,1 bis 1%. Der Schmelzflußindex beträgt im allgemeinen 1 bis 20g/10min, vorzugsweise 3 bis 10g/10min.

Die Deckschichten der Folie können gegebenenfalls zusätzlich übliche Additive wie Neutralisationsmittel, Stabilisatoren, Antistatika, Antiblockmittel und/oder Gleitmittel in jeweils wirksamen Mengen enthalten. Die Dicke der Deckschichten kann in den üblichen Bereichen variieren und liegt am allgemeinen zwischen 0,5 und 5 µm.

Die Basisschicht der mehrschichtigen Polyolefinfolie ist grundsätzlich aus den vorstehend beschriebenen Polyolefinen aufgebaut, worunter die beschriebenen Propylenhomopolymere bevorzugt sind, insbesondere isotaktische Propylenhomopolymere. Im allgemeinen enthält die Basisschicht mindestens 70 bis 100, vorzugsweise 80 bis < 100Gew.-% Polyolefin bzw. Propylenpolymer. Des weiteren sind in der Basisschicht üblicherweise Neutralisationsmittel und Stabilisatoren, sowie gegebenenfalls weiter übliche Additive in jeweils wirksamen Mengen. Für opake oder weiß-opake Ausführungsformen der Folie enthält die Basisschicht zusätzlich vakuoleninitiierende Füllstoffe und/oder Pigmente. Art und Menge der Füllstoffe sind im Stand der Technik bekannt.

Gegebenenfalls kann die Folie als weitere Schichten einseitig oder beidseitig Zwischenschichten aufweisen. Die Zwischenschicht/en kann/können aus den für die Basisschicht beschriebenen Polyolefinen bestehen und gegebenenfalls üblichen Additive wie Antistatika, Neutralisationsmittel, Gleitmittel und/oder Stabilisatoren, sowie gegebenenfalls Antiblockmittel, enthalten. Die Dicke der Zwischenschicht/en, wenn vorhanden, ist gröber als 0,3 mm und liegt vorzugsweise im Bereich von 1,0 bis 15 mm, insbesondere 1,5 bis 10 mm.

Die Gesamtdicke der erfindungsgemäßen Polyolefinfolie kann innerhalb weiter Grenzen variieren und richtet sich nach dem beabsichtigten Einsatz. Sie beträgt vorzugsweise 4 bis 100 mm, insbesondere 5 bis 90 mm, vorzugsweise 10 bis 50 mm, wobei die Basisschicht etwa 40 bis 100 % der Gesamtfoliendicke ausmacht.

Die erfindungsgemäße kombinierte Vorbehandlung wird in die üblichen an sich bekannten Herstellverfahren für biaxial orientierte Folien integriert. Diese Herstellverfahren sind für verschiedene Polymere, aus denen die Folien aufgebaut sein können, verschieden. Grundsätzlich umfaßen alle Verfahren zur Herstellung der biaxial orientierten Folie die Schritte der Extrusion, Abzug, Längsstreckung, Plasmavorbehandlung, Querstreckung, Fixierung, Corona- oder Flammbehandlung und abschließende Wicklung. Das Verfahren wird nachstehend am Beispiel der biaxial orientierten Polypropylenfolie im Detail beschrieben.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gestreckt (orientiert), die gestreckte Folie thermofixiert.

Die biaxiale Streckung (Orientierung) wird sequentiell durchgeführt, wobei im allgemeinen zuerst längs (in Maschinenrichtung) und dann quer (senkrecht zur Maschinenrichtung) gestreckt wird. Grundsätzlich ist die erfindungsgemäße kombinierte Vorbehandlung auch in einem Simultanstreckverfahren anwendbar. In dieser Ausführungsform erfolgt die Plasmabehandlung vor der Simultanstreckung der Folie und die Coronabehandlung nach der Fixierung der verstreckten Folie. Die weitere Beschreibung der Folienherstellung erfolgt am Beispiel einer Flachfolienextrusion mit anschließender sequentieller Streckung.

Zunächst wird wie beim Extrusionsverfahren üblich das Polymere bzw. die Polymermischung der einzelnen Schichten in einem Extruder komprimiert und verflüssigt, wobei gegebenenfalls zugesetzte Additive bereits im Polymer bzw. in der Polymermischung enthalten sein können. Die Schmelzen werden dann gleichzeitig durch eine Flachdüse (Breitschlitzdüse) gepreßt, und die ausgepreßte ein- oder mehrschichtige Folie wird auf eine r oder mehreren Abzugswalzen abgezogen, wobei sie abkühlt und sich verfestigt. Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 50°C, zu halten.

Die so erhaltene Folie wird dann längsgestreckt, was zu einer Orientierung der Molekülketten in Längsrichtung führt. Das Längsstrecken wird man zweckmäßigerweise mit Hilfe zweier entsprechend dem angestrebten Streckverhältnis verschieden schnelllaufender Walzen durchführen Die Längsstreckverhältnisse liegen im Bereich von 4 bis 8 vorzugsweise 5 bis 6. Im allgemeinen wird die Längsstreckung bei einer Temperatur von 80 bis 150 °C durchgeführt. Nach der Längsstreckung erfolgt die mehrfach beschriebene Plasmavorbehandlung, an welche die Querstreckung (d.h. quer zur Extrusionsrichtung) anschließt. Das Querstrecken erfolgt mit Hilfe eines Kluppenrahmens, vorzugsweise bei einer Temperatur von 120 bis 180 °C. Die Querstreckverhältnisse liegen im Bereich von 5 bis 10, vorzugsweise 7 bis 9. An die Streckung der Folie schließt sich ihre Thermofixierung (Wärmebehandlung) an, wobei die Folie etwa 0,1 bis 10 s lang bei einer Temperatur von 100 bis 160 °C gehalten wird. Je nach gewünschten mechanischen Eigenschaften, insbesondere Schrumpf, wird die Folie während der Fixierung mehr oder weniger konvergierend gefahren. Vor dem abschließenden Aufwickeln erfolgt die Corona- oder Flammbehandlung in an sich bekannter Weise, nach den vorstehend beschriebenen Verfahren.

Erfindungsgemäß weißt die so hergestellte Polypropylen-Folie unmittelbar nach der Herstellung eine Oberflächenspannung von über 48mN/m auf, vorzugsweise 50 bis 60mN/m.

Zur Charakterisierung der Rohstoffe und der Folien wurden die folgenden

### Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Oberflächenspannung

Die Oberflächenspannung wurde mittels der sogenannten Tintenmethode (DIN 53 364) bestimmt. Um die Haltbarkeit der Vorbehandlung zu bestimmen wurde die Oberflächenspannung unmittelbar nach der Herstellung in definierten Zeiträumen (siehe Tabelle 1) nach der Herstellung gemessen.

Die Erfindung wird nun an Hand von Ausführungsbeispielen näher erläutert:

Beispiel 1 (Kombi Behandlung auf Copo Deckschicht)

Es wurde durch Coextrusion und anschließende stufenweise Orientierung in Längs- und Querrichtung eine transparente dreischichtige Folie bestehend aus der Basisschicht B und beidseitigen Deckschichten A mit einer Gesamtdicke von 60 µm hergestellt. Die Deckschichten A hatten jeweils eine Dicke von 1,0 µm. Die Schichten waren wie folgt zusammengesetzt:

### Basisschicht B:

~100 Gew.-% Propylenhomopolymer mit einem Schmelzpunkt von 165 °C und einem Schmelzflußindex von 3,4g/10min und einem Kettenisotaxie-Index von 94 %

### Deckschichten A und A1

~99,5 Gew.-% statistisches Copolymer aus Propylen-Ethylen, mit einem Ethylengehalt von 5 Gew.-% bezogen auf das Copolymer. Der Schmelzflußindex betrug 6,0g/10min

0,5 Gew.-% Antiblockmittel mit einer mittleren Teilchengröße von 4 µm

Alle Schichten enthielten übliche geringe Mengen an Stabilisator (z.B. Irganox 1010 Irgafos 168) und Neutralisationsmittel (CaStearat).

Die Herstellungsbedingungen in den einzelnen Verfahrensschritten waren:
Extrusion: Temperaturen Basisschicht B: 260 °C
Deckschichten A: 230 °C
Temperatur der Abzugswalze: 20 °C
Längsstreckung: Temperatur: 100 °C
Längsstreckverhältnis: 1 : 4,5
Plasmabehandlung auf einer Deckschicht A1
Querstreckung: Temperatur: 165 °C
Querstreckverhältnis: 1 : 9
Fixierung: Temperatur: 140 °C
Konvergenz: 10 %

Coronavorbehandlung auf der Deckschicht A1 Corona 10000V / 10000Hz

Bei dem Querstreckverhältnis von 1:9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie , ebenfalls um die zweifache Säumstreifenbreite b reduziert.

Die so hergestellte Folie hatte unmittelbar nach der Herstellung auf der Oberfläche der Deckschicht A1 eine Oberflächenspannung von circa 56mN/m. Der Abfall der Behandlung ist in Tabelle 1 dargestellt.

Beispiel 2 (Kombi Behandlung auf Homo Deckschicht)

Es wurde eine Folie wie in Beispiel 1 beschrieben hergestellt. Im Unterschied zu Beispiel 1 war die Deckschicht A1 jetzt aus Propylenhomopolymer aufgebaut.

### Deckschicht A1

∼99,5 Gew.-% Propylenhomopolymer mit einem Schmelzpunkt von 165 °C und einem Schmelzflußindex von 3,4g/10min und einem Kettenisotaxie-Index von 94 %

0,5 Gew.-% SiO2 als Antiblockmittel mit einer mittleren Teilchengröße von 4 µm

Die so hergestellte Folie hatte auf der Oberföäche der Deckschicht A1 unmittelbar nach der Herstellung eine Oberflächenspannung von 52-54mN/m. Der Abfall der Behandlung ist in Tabelle 1 dargestellt.

### Vergleichsbeispiel 1 (Nur Corona auf Copo Deckschicht)

Es wurde eine Folie, wie in Beispiel 1 beschrieben, hergestellt. Im Unterschied zu Beispiel 1 wurde keine Plasmabehandlung vor der Querstreckung durchgeführt. Die Zusammensetzung der Folie und die übrigen Herstellbedingungen wurden nicht verändert.

Die so hergestellte Folie hatte unmittelbar nach der Herstellung eine Oberflächenspannung von circa 44mN/m auf der Oberfläche der behandelten Deckschicht A1. Der Abfall der Behandlung ist in Tabelle 1 dargestellt.

### Vergleichsbeispiel 2: (Nur Corona auf Homo Deckschicht)

Es wurde eine Folie, wie in Beispiel 2 beschrieben, hergestellt. Im Unterschied zu Beispiel 2 wurde keine Plasmabehandlung vor der Querstreckung durchgeführt. Die Zusammensetzung der Folie und die übrigen Herstellbedingungen wurden nicht verändert.

Die so hergestellte Folie hatte unmittelbar nach der Herstellung eine Oberflächenspannung von 42 - 44mN/m auf der Oberfläche der behandelten Deckschicht A1. Der Abfall der Behandlung ist in Tabelle 1 dargestellt.

### Vergleichsbeispiel 3 (Nur Plasma auf Copo Deckschicht vor dem Rahmen)

Es wurde eine Folie, wie in Beispiel 1 beschrieben, hergestellt. Im Unterschied zu Beispiel 1 wurde keine Coronabehandlung nach der Querstreckung durchgeführt. Die Zusammensetzung der Folie und die übrigen Herstellbedingungen wurden nicht verändert.

Die so hergestellte Folie hatte unmittelbar nach der Herstellung eine Oberflächenspannung von <34 mN/m auf der Oberfläche der behandelten Deckschicht A1. Die Oberflächenbehandlung blieb auf einem Wert von <34 mN/m.
Tabelle 1: [0089]

**Tabelle 1**

| Zeit [Tage] nach Behandlung | Oberflächenenergie [mN/m] | | | | |
|---|---|---|---|---|---|
| | Beispiel 1 | Beispiel 2 | Vergleichs-beispiel 1 | Vergleichs-beispiel 2 | Vergleichsbeispiel 3 |
| 2 | 54 - 56 | 50 - 52 | 43 - 44 | 41 - 42 | 34 |
| 30 | 50 - 52 | 48 - 50 | 41 - 42 | 39 - 40 | ∼34 |
| 90 | 48 - 49 | 48 - 49 | 40 - 41 | 38 - 40 | ∼34 |
| 180 | ∼48 | 46 - 48 | 40 - 41 | 37 - 39 | ∼34 |
| 220 | ∼48 | ∼46 | 39 - 40 | ∼38 | ∼34 |

## Patentansprüche

1. Verfahren zur Erhöhung der Oberflächenspannung von biaxial verstreckten Polyolefinfolien, deren Verstreckung aufeinanderfolgend durchgeführt wird, wobei
• zuerst in Längsrichtung und anschließend in Querrichtung verstreckt wird, und
• die Polyolefinfolie auf einer Oberfläche nach der Längsstreckung und vor der Querstreckung über ihre Breite mittels Atmosphärendruck-Plasma behandelt wird
• und die Polyolefinfolie nach der Querstreckung und vor dem Aufwickeln zusätzlich einer zweiten Behandlung mittels Corona oder Flamme unterworfen wird und
• wobei diese zweite Behandlung auf der gleichen bereits plasmabehandelten Oberfläche erfolgt.

2. Verfahren zur Erhöhung der Oberflächenspannung von biaxial verstreckten Polyolefinfolien, deren Verstreckung simultan durchgeführt wird, nach dem die Polyolefinfolie vor der Simultanreckung auf einer Oberfläche über ihre Breite mittels Atmosphärendruck-Plasma behandelt und nach der Simultanreckung und vor dem Aufwickeln zusätzlich einer zweiten Behandlung mittels Corona oder Flamme unterworfen wird, wobei diese zweite Behandlung auf der gleichen bereits plasmabehandelten Oberfläche erfolgt.

3. Verfahren nach Anspruch 1 oder 2, **dadurch gekennzeichnet, daß** die zweite Behandlung eine Coronabehandlung ist.

4. Verfahren nach Anspruch 1 oder 2, **dadurch gekennzeichnet, daß** die zweite Behandlung eine Flammbehandlung ist.

5. Verfahren nach einem der Ansprüche 1 bis 4, **dadurch gekennzeichnet, daß** die Folie eine ein- oder mehrschichtige Polyolefinfolie ist.

6. Verfahren nach Anspruch 5, **dadurch gekennzeichnet, daß** die Folie eine ein- oder mehrschichtige Polypropylenfolie ist.

7. Verfahren nach Anspruch 6, **dadurch gekennzeichnet, daß** die Folie eine mehrschichtige Polypropylenfolie aus einer Basisschicht und mindestens zwei Deckschichten ist und diese Basisschicht überwiegend aus Propylenhomopolymer aufgebaut ist und die Deckschichten aus Propylenhomopolymer, Propylencopolymer, Propylenterpolymer, Polyethylen, Polybutylen oder aus Mischungen dieser Polymeren aufgebaut ist.

8. Verfahren nach einem der Ansprüche 1 bis 7, **dadurch gekennzeichnet, daß** die Polyolefinfolie auf einer Oberfläche für einen Zeitraum von bis zu 3 Monaten nach ihrer Herstellung eine Oberflächenspannung von mindesten 48 bis 60 mN/m aufweist.

9. Verwendung einer biaxial orientierten Polyolefinfolie hergestellt nach einem Verfahren nach einem der Ansprüche 1 bis 8. zur Bedruckung, Metallisierung, Laminierung, Kaschierung oder Beschichtung auf der behandelten Oberfläche wobei die Polyolefinfolie vor der Bedruckung, Metallisierung, Laminierung, Kaschierung oder Beschichtung keiner weiteren Behandlung zur Erhöhung der Oberflächenspannung unterworfen wird.

10. Verfahren zur Erhöhung der Oberflächenspannung von monoaxial verstreckten Polyolefinfolien, wobei die Polyolefinfolien vor der Verstreckung auf einer Oberfläche über ihre Breite mittels Atmosphärendruck-Plasma behandelt und nach der Verstreckung und vor dem Aufwickeln zusätzlich einer zweiten Behandlung mittels Corona oder Flamme unterworfen wird, wobei diese zweite Behandlung auf der gleichen bereits plasmabehandelten Oberfläche erfolgt.

11. Verfahren nach Anspruch 10, **dadurch gekennzeichnet, daß** die Verstreckung in Längsrichtung der Polyolefinfolien erfolgt.

## Claims

1. A method of increasing the surface tension of biaxially stretched polyolefin film, the stretching of which is carried out consecutively, wherein
• stretching is initially carried out in the longitudinal direction and subsequently in the transverse direction and
• the polyolefin film is treated by means of atmospheric pressure plasma on one surface after longitudinal stretching and over its breadth before transverse stretching
• and after transverse stretching and before rolling up the polyolefin film additionally undergoes a second treatment with a corona or flame and
• wherein this second treatment takes place on the same already plasma-treated surface.

2. The method of increasing the surface tension of biaxially stretched polyolefin films, the stretching of which takes placed simultaneously, according to which before the simultaneous stretching the polyolefin film is treated by means of atmospheric pressure plasma on a surface over its breadth and after the simultaneous stretching and before rolling up it additionally undergoes a second treatment by means of corona or flame, wherein this second treatment takes place on the same already plasma-treated surface.

3. The method according to claim 1 or 2, **characterised in that** the second treatment is a corona treatment.

4. The method according to claim 1 or 2, **characterised in that** the second treatment is a flame treatment.

5. The method according to any one of claims 1 to 4, **characterised in that** the film is a single or multiple-layer polyolefin film.

6. The method according to claim 5, **characterised in that** the film is a single or multiple-layer polypropylene film.

7. The method according to claim 6, **characterised in** the film is a multiple-layer polypropylene film comprising a base layer and at least two cover layers, and this base layer is predominantly built up of propylene homopolymer and the cover layers are built up of propylene homopolymer, propylene copolymer, propylene terpolymer, polyethylene, polybutylene or of mixtures of these polymers.

8. The method according to any one of claims 1 to 7, **characterised in that** the polyolefin film on one surface exhibits a surface tension of at least 48 to 60 mN/m for a period of up to 3 months after being manufactured.

9. Use of a biaxially orientated polyolefin film manufactured in accordance with a method according to any one of claims 1 to 8 for printing, metallisation, lamination, masking or coating on the treated surface wherein before the printing, metallisation, lamination, masking or coating the polyolefin film does not undergo any further treatment for increasing the surface tension.

10. A method of increasing the surface tension of monoaxially stretched polyolefin films, wherein before stretching the polyolefin films are treated by means of atmospheric pressure plasma on a surface over their breadth and before rolling up additionally undergo a second treatment by means of corona or flame, wherein this second treatment takes place on the same already plasma-treated surface.

11. The method according to claim 10, **characterised in that** the stretching takes place in the longitudinal direction of the polyolefin films.

## Revendications

1. Procédé destiné à augmenter la tension superficielle de films polyoléfines à étirage biaxial dont l'étirage a lieu successivement,
• l'étirage ayant lieu d'abord dans la direction longitudinale et ensuite dans la direction transversale et
• le film polyoléfine étant traité sur une surface, après l'étirage longitudinal et avant l'étirage transversal, sur sa largeur, au moyen de plasma à pression atmosphérique
• et le film polyoléfine étant soumis en supplément, après l'étirage transversal et avant l'enroulement à un deuxième traitement, corona ou à la flamme et
• ce deuxième traitement s'effectuant sur la même surface déjà traitée au plasma.

2. Procédé destiné à augmenter la tension superficielle de films polyoléfines à étirage biaxial dont l'étirage a lieu simultanément, selon lequel le film polyoléfine est traité sur une surface, avant l'allongement simultané, sur sa largeur, au moyen de plasma à pression atmosphérique et après l'allongement simultané et avant l'enroulement, est soumis en supplément à un deuxième traitement, corona ou à la flamme, ce deuxième traitement s'effectuant sur la même surface déjà traitée au plasma.

3. Procédé selon la revendication 1 ou 2, **caractérisé en ce que** le deuxième traitement est un traitement corona.

4. Procédé selon la revendication 1 ou 2, **caractérisé en ce que** le deuxième traitement est un traitement à la flamme.

5. Procédé selon l'une quelconque des revendications 1 à 4, **caractérisé en ce que** le film est un film polyoléfine monocouche ou multicouches.

6. Procédé selon la revendication 5, **caractérisé en ce que en ce que** le film est un film polypropylène monocouche ou multicouches.

7. Procédé selon la revendication 6, **caractérisé en ce que** le film est un film polypropylène multicouches, composé d'une couche de base et d'au moins deux couches de recouvrement et **en ce que** cette couche de base est majoritairement constituée d'un homopolymère de propylène et les couches de recouvrement sont constituées d'un homopolymère de propylène, d'un copolymère de propylène, d'un terpolymère de propylène, d'un polyéthylène, d'un polybutylène ou de mélanges desdits polymères.

8. Procédé selon l'une quelconque des revendications 1 à 7, **caractérisé en ce que** pour une période de jusqu'à 3 mois après sa fabrication, le film polyoléfine présente sur une surface une tension superficielle d'au moins 48 à 60 mN/m.

9. Utilisation d'un film polyoléfine à orientation biaxiale, fabriqué d'après un procédé selon l'une quelconque des revendications 1 à 8 pour l'impression, la métallisation, le laminage, le contre-collage ou le revêtement sur la surface traitée, avant l'impression, la métallisation, le laminage, le contre-collage ou le revêtement, le film polyoléfine n'étant soumis à aucun traitement supplémentaire pour augmenter sa tension superficielle.

10. Procédé destiné à augmenter la tension superficielle de films polyoléfines à étirage monoaxial, les films polyoléfines étant traités sur une surface, avant l'étirage, sur leur largeur au moyen de plasma à pression atmosphérique et après l'étirage et avant l'enroulement, étant soumis en supplément à un deuxième traitement, corona ou à la flamme ce deuxième traitement s'effectuant sur la même surface déjà traitée au plasma.

11. Procédé selon la revendication 10, **caractérisé en ce que** l'étirage a lieu dans la direction longitudinale des films polyoléfines.
